(19) Europäisches Patentamt
European Patent Office
Office européen des brevets

(11) EP 2 380 758 A1

(12) EUROPEAN PATENT APPLICATION

(43) Date of publication:
26.10.2011 Bulletin 2011/43

(51) Int Cl.:
B60C 23/00 (2006.01)

(21) Application number: 10161090.5

(22) Date of filing: 26.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: Vehold B.V.
2719 RA Zoetermeer (NL)

(72) Inventor: Verweij, Jan Hendrik
2719 RA, Zoetermeer (NL)

(74) Representative: Hatzmann, Martin
Vereenigde
Johan de Wittlaan 7
2517 JR Den Haag (NL)

(54) **A pressure indicating valve cap for mounting on a valve stem of a vehicle tire**

(57) A pressure indicating valve cap (10) suitable for mounting on a valve stem of a valve of a vehicle tire, the valve cap comprising a housing assembly (12,14,16,18,20) bounding a central valve stem receiving space (22) and a battery receiving space (32), the housing assembly accommodating a printed circuit board (34) with a pressure sensor (36), a central processing unit (CPU), a memory, and pressure fault signaling means (38), wherein the CPU is configured to measure a reference pressure value ($p_{reference}$) when the pressure indicating valve cap (10) is screwed onto the valve stem and to store that in the memory, and to repeatedly measure an actual pressure value ($p_{actual}$) and to compare the actual pressure value with the reference pressure value and with each comparison establish whether the comparison indicates a pressure value change that is larger than a threshold factor times the reference pressure value and in the affirmative activate the pressure fault signaling means (38).

Printed by Jouve, 75001 PARIS (FR)

**Description**

The invention relates to pressure indicating valve cap suitable for mounting on a valve stem of a valve of a vehicle tire.

Generally tires of vehicles tend to be slightly porous and thus tend to loose pressure over time, whereas these tires generally have a narrow range of optimal and/or designed operating pressure. A suboptimal pressure such as a pressure of a vehicle tire below the designed operating pressure of the tire can cause a number of problems, ranging from suboptimal roll resistance, suboptimal grip and excessive wear to a considerable enhancement of the accident probability of the vehicle in question.

For these and other reasons it is important that the driver of the vehicle checks the pressure of the tires on a regular basis. This pressure checking is however cumbersome and time consuming, which is one of the reasons why the pressure checking, although being important for safety reasons, is too often neglected. In order to solve this problem several indication systems for registering pressure in vehicle tires have been proposed.

One type of pressure indicating valve cap is disclosed in the United States patent US 6 629 454. This document discloses a screw on type of pressure indicator for vehicle tires, comprising a first and a second pressure chamber separated by a membrane, wherein a first surface of the membrane acts as a first contact terminal, and a first battery pole opposite to the first surface of the membrane acts as a second contact terminal. The first contact terminal is connected to an electrical printed circuit, which in turn is connected to an indicator connected to a second pole of the battery.

Once the pressure in the first chamber, which is connected to the inner gas volume of the vehicle tire, is low in comparison to the pressure in a second chamber, the membrane between the chambers flexes, causing the first and second contact terminals to make contact and thereby closing an electrical circuit. By closing the electrical circuit, the battery becomes connected to the indicator through the contacting terminals and the electrical printed circuit. Once this connection is established the logical printed circuit will generate an intermitted electrical signal which actuates the indicator. In US 6 629 454, the indicator comprises a set of light emitting diodes. Thus it becomes visible that the pressure is too low and that a dangerous situation is developing.

A disadvantage of this known system is that it is rather complicated because of the presence of both a main pressure chamber and a counter pressure chamber and a flexible membrane between these two chambers. Such a construction is rather complicated and costly.

A further disadvantage of this system is that the indicator is adding considerable length to the valve stem of the tube and/or tire, leading to impractical space requirements. The pressure indicator can for instance reach outside the rim of the wheel and can may even disturb the wheel balance.

An object of the invention can be to provide an alternative pressure indicator in which at least one of the above disadvantages is alleviated.

To that end the invention provides a pressure indicating valve cap suitable for mounting on a valve stem of a valve of a vehicle tire, the valve cap comprising:

- a housing assembly bounding a central valve stem receiving space of a substantially cylindrical configuration having a central longitudinal axis, the housing assembly including:

    ○ a receiving space inlet opening;
    ○ a receiving space end face opposite the inlet opening;
    ○ a cylindrical housing wall having internal screw thread that is configured for engaging an external screw thread on the valve stem;
    ○ a valve stem actuator protruding from the receiving space end face into the receiving space and co-axially arranged relative to the central longitudinal axis and configured to keep the valve in an opened condition;

- a battery receiving space being provided in the housing assembly;
- a printed circuit board being provided in the housing assembly and including:

    ○ a pressure sensor;
    ○ a central processing unit (CPU);
    ○ a memory;
    ○ pressure fault signaling means;
    wherein the CPU is configured:
    ○ to measure a reference pressure value when the pressure indicating valve cap is screwed onto the valve stem and to store that reference pressure value in the memory;
    ○ to repeatedly measure an actual pressure value and to compare the actual pressure value with the reference pressure value and with each comparison establish whether the comparison between the actual pressure value and the reference pressure value indicates a pressure value change that is larger than a threshold factor times the reference pressure value and in the affirmative activate the pressure fault signaling means.

Because a simple pressure sensor is used as well as a CPU and a memory, the complicated construction of a counter pressure chamber that has to be calibrated each time when the cap is screwed on the valve stem can be omitted. The inventor has recognized that a disadvantage of a counter pressure chamber is that the pressure prevailing in that chamber may change over time due to leakage. Such leakage is detrimental to the accuracy of the known pressure indicating valve cap. Further, the construction of valves that are opened when the known cap is only partially screwed on the valve stem to allow air to fill the counter pressure chamber can be omitted, which is favorable for the simplicity and thus for the costs of the construction. The pressure indicating valve cap according to the invention has the advantage that it can be used for all kind of tires having different prescribed air pressures. Because the warning is related to the reference pressure that is the initial pressure prevailing in the tire when the pressure indicating cap is screwed on the valve stem of the tire, the pressure indicating cap is universally applicable. The warning is signal is not related to absolute pressures but to pressure changes that are a proportion of the initial pressure. This is all achieved without the use of a counter pressure chamber in which a reference pressure has to be established and maintained.

Further embodiments of the invention are described in the dependent claims and will be further elucidated with reference to the drawings in which an example of the various embodiments is shown.

Fig. 1 shows a side view of example of a pressure indicating valve cap;
Fig. 2 shows a top view of the valve cap of Fig. 1;
Fig. 3 shows a cross section over line III-III of Fig. 2;
Fig. 4 shows a cross section of line IV-IV of Fig. 2;
Fig. 5 shows an exploded view of the valve cap shown in Figs. 1-4; and
Fig. 6 shows a side view of a special tool that may be used to screw and unscrew the valve cap on and off a valve stem.

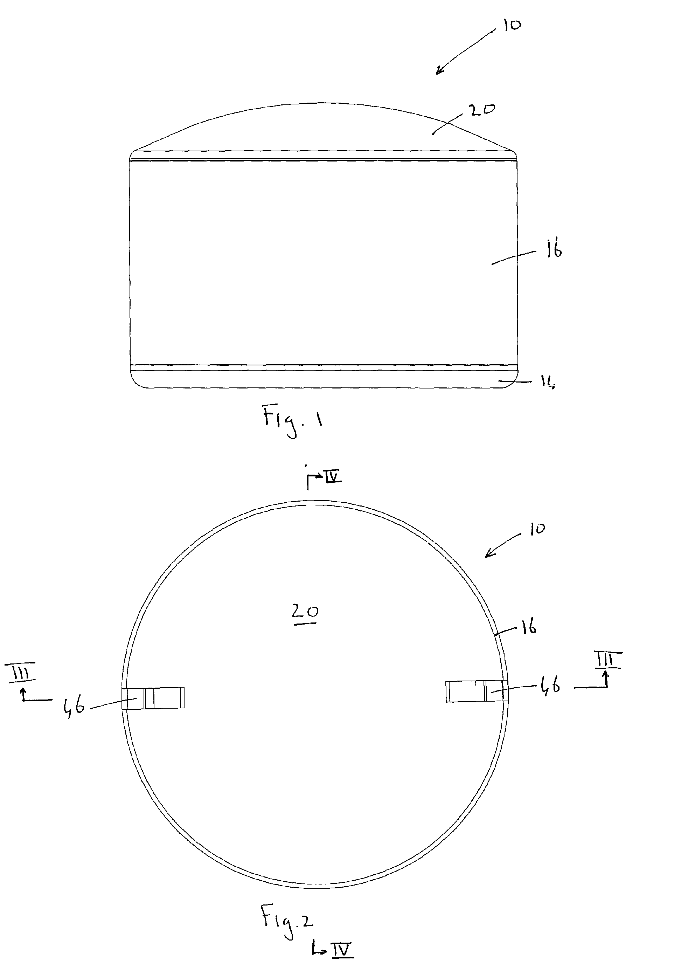

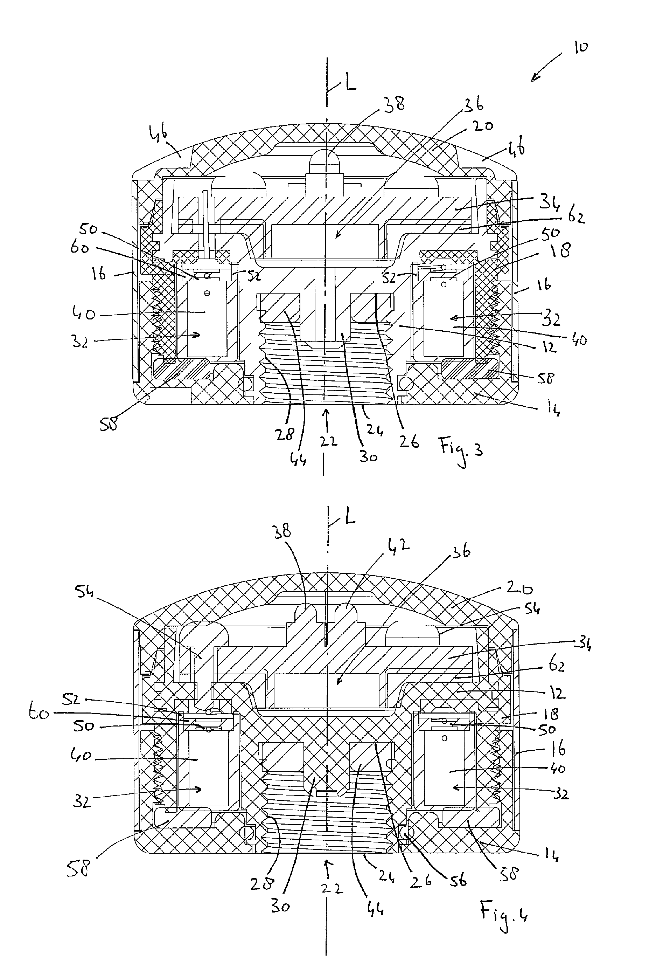

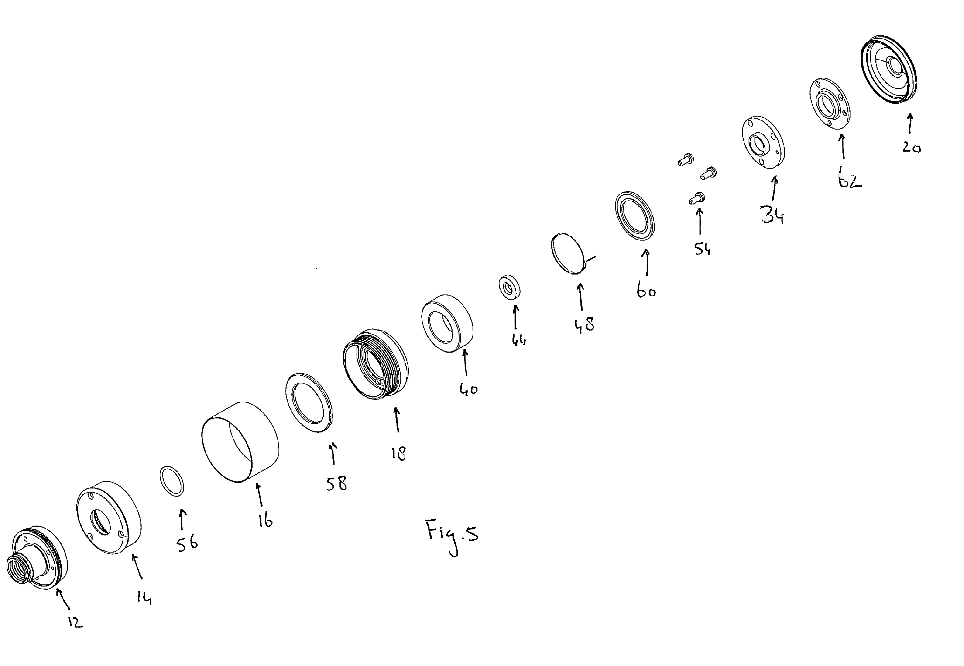

The example of the valve cap 10 shown in figures 1-5 includes various embodiments that are described in the dependent claims and that may be applied independently from each other.

In general terms an embodiment of a pressure indicating valve cap 10 that is suitable for mounting on a valve stem of a valve of a vehicle tire comprises a housing assembly 12, 14, 16, 18, 20 that bounds a central valve stem receiving space 22 of a substantially cylindrical configuration. The housing assembly includes a receiving space inlet opening 24, a receiving space end face 26 opposite the inlet opening 24 and a cylindrical housing wall 28 having internal screw thread that is configured for engaging an external screw thread on the valve stem. The housing assembly further includes a valve stem actuator 30 protruding from the receiving space end face 26 into the receiving space 22 and co-axially arranged relative to the central longitudinal axis L and configured to keep the valve in an opened condition. A battery receiving space 32 is provided in the housing assembly 12, 14, 16, 18, 20 as well as a printed circuit board 34. The printed circuit board includes a pressure sensor 36, a central processing unit (CPU), and a memory. In the present embodiment the printed circuit board 34 also carries pressure fault signaling means 38. In an alternative embodiment these pressure fault signaling means may be mounted on the housing. The CPU is configured to measure a reference pressure value ($p_{reference}$) when the pressure indicating valve cap 10 is screwed onto the valve stem and to store that reference pressure value ($p_{reference}$) in the memory. After this initial measure directly after the valve cap 10 has been screwed on the valve, the CPU is configured to repeatedly measure an actual pressure value ($p_{actual}$) and to compare the actual pressure value ($p_{actual}$) with the reference pressure value ($p_{reference}$) and with each comparison establish whether the comparison between the actual pressure value ($p_{actual}$) and the reference pressure value ($p_{reference}$) indicates a pressure value change that is larger than a threshold factor times the reference pressure value ($p_{reference}$) and in the affirmative activate the pressure fault signaling means 38.

In an embodiment, the threshold factor may be in the range of 0,02 to 0,15, that is in the range of 2% to 15%. More specifically, the threshold factor may be 0,10 ± 0,02, that is 10% ± 2%. With such threshold values the safety of the tire and the roll resistance of the tire are kept in optimal conditions.

In an embodiment, of which an example is shown in Figs. 1-5, the battery receiving space 32 may extends circumferentially around the valve stem receiving space 22 and may have a donut shape having a central axis that is co-axial with the central axis L of the valve stem receiving space 22.

Such an embodiment has the advantage that the height of the valve cap 10 can be kept minimal. This may be important in view of the balance of the tire. Additionally, because of the relative small height, the valve cap will not protrude beyond the front side of the tire.

In an embodiment of which an example is shown in Figs. 1-5, the pressure indicating valve cap 10 may include a battery 40 that has a donut shape that is received in the donut shaped battery receiving space 32. Such a donut shaped battery 40 optimally uses the volume of the battery receiving space 32 and thus has a maximum volume and, consequently, a maximum capacity.

In an embodiment, of which an example is shown in Figs. 1-5, the housing assembly may include a top cover 20 of light transmissive material. In that embodiment, the pressure fault signaling means 38 may include at least one light emitting diode (LED) that is arranged under the top cover 20 in the housing assembly. The user will see light being emitted from his valve cap 10 when the pressure in the tire is not within the limits determined by the threshold value.

In an embodiment, of which an example is shown in Figs. 1-5, the valve cap 10 may include a battery 40 that is arranged in the battery receiving space and battery life signaling means 42. In such an embodiment the CPU may be configured to repeatedly monitor the remaining capacity of a battery 40 and to activate the battery life signaling means 42 when the remaining capacity is under a battery life threshold value.

With such an embodiment the user may be warned when the battery is almost empty and should be replaced in order to guarantee proper functioning of the pressure indicating valve cap.

In an embodiment, of which an example is shown in Figs. 1-5, the battery life signaling means 42 may include at least one light emitting diode LED that is arranged on the printed circuit board 34 under the top cover 20 in the housing assembly. The battery life LED 42 and the pressure fault LED 38 preferably have different colors, for example, yellow and red respectively.

In an embodiment, of which an example is shown in Figs. 1-5, the valve cap 10 may include a temperature sensor. In that embodiment the CPU may be configured to measure a reference temperature value ($T_{reference}$) when the pressure indicating valve cap 10 is screwed onto the valve stem and to store that reference temperature value ($T_{reference}$) in the memory. The CPU may also be configured to, after the initial measurement for determining the reference temperature value ($T_{reference}$), repeatedly measure an actual pressure value ($p_{actual}$) as well as an actual temperature value ($T_{actual}$) and to repeatedly determine a temperature compensated actual pressure value ($p_{actual}$ compensated) on the basis of the formula:

$$p_{actual\ compensated} = p_{actual} \cdot (T_{reference}/T_{actual}).$$

The CPU may additionally be configured to compare the temperature compensated actual pressure value ($p_{actual}$ compensated) with the reference pressure value ($p_{reference}$) and with each comparison establish whether the comparison between the temperature compensated actual pressure value ($p_{actual}$ compensated) and the reference pressure value ($p_{reference}$) indicates a pressure value change that is larger than a threshold factor times the reference pressure value ($p_{reference}$) and in the affirmative activate the pressure fault signaling means 38.

Such an embodiment has compensates pressure variations due to temperature variations and thus does not inadvertently lead to pressure fault indication.

In an embodiment, of which an example is shown in Figs. 1-5, the pressure indicating valve cap 10 may include a seal 44 arranged against the receiving space end face 26 and configured to form an air tight seal between an end rim of the valve stem and the receiving space end face 26.

Further seals 56, 58, and 62 may be provided to air tightly close off the housing assembly so as to maintain the air pressure within the housing assembly and to prevent the tire from deflating.

Part 60 is an electricity isolation ring.

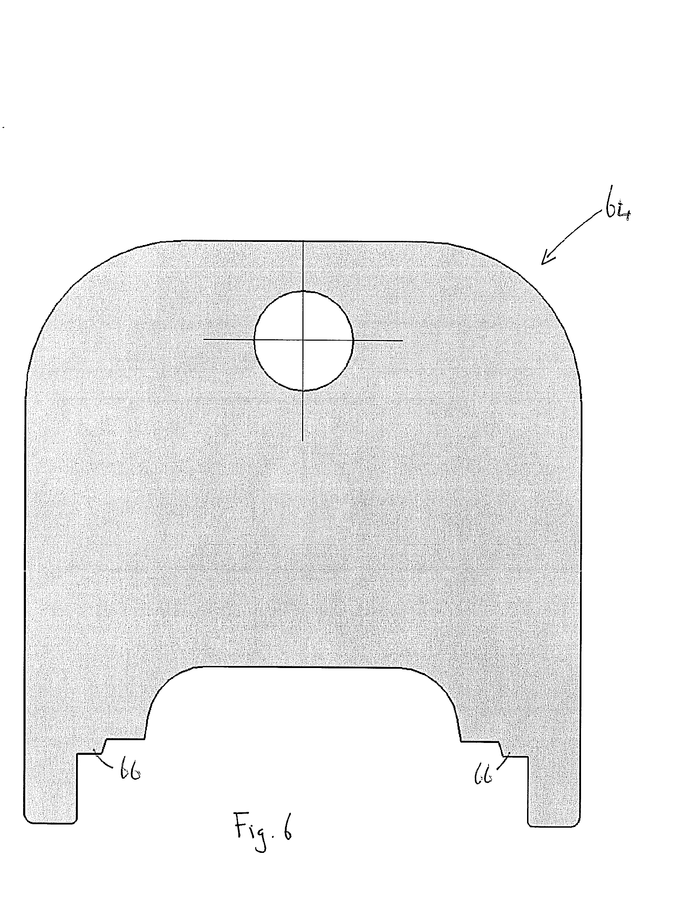

In an embodiment, of which a example is shown in Figs. 1-5, the housing assembly may including an anti-theft jacket 16 having a cylindrical configuration of which a central axis is co-axial with the central axis L of the valve stem receiving space 22. The anti-theft jacket 16 has a height that is substantially equal to the height of the pressure indicating valve cap 10 and is freely rotatable around the other parts 12, 14, 18, 20 of the housing assembly. A top cover 20 of the housing may have notches 46 that are not engageable by hand and that may be engaged by a special tool 64 of which an example is shown in Fig. 6. The special tool 64 shown in Fig. 6 is a flat piece of plate material having two protrusions 66 that may be inserted into the notches 46.

To give an indication of the sizes of an embodiment of the valve cap 10 it is noted that the ratio of the diameter of the valve stem receiving space 22 relative to the external diameter of the valve cap 10 may be in the range of 1 : 2,5 to 1 : 3,5, more particularly approximately 1 : 3. The ratio of the diameter of the valve stem receiving space 22 relative to the total height of the valve cap 10 may be in the range of 1 : 1,5 to 1 : 3 more particularly approximately 1 : 2,2. The ratio of the diameter of the valve stem receiving space 22 relative to the depth of the valve stem receiving space 22 is in the range of 1 : 0,7 to 1 : 1,2, more particularly approximately 1 : 0,9.

With such dimensions, it is prevented that the valve cap 10 protrudes beyond the frontal side face of the tire. Also the need to re-balance the wheel after mounting the valve cap 10 is alleviated because of the very small weight of the small valve cap 10.

In an embodiment, of which an example is shown in Figs. 1-5, the pressure indicating valve cap 10 may include an electrical contact spring 48 that is arranged to electrically connect a first pole 50 of a battery 40 that is received in the battery receiving space 32 with a electronic circuit of the printed circuit board 34. The housing part 12 that is electrically conductive may contact to a second pole 52 of the battery 40. The electrically conductive housing part 12 may be electrically connected to the electronic circuit via mounting screws 54 that mechanically connect the printed circuit board 34 to the electrically conductive housing part 12.

It will be apparent to those having ordinary skill in the art that various modifications and variations can be made to the pressure indicating valve cap as disclosed herein. Other embodiments will be apparent to those having ordinary skill in the art from consideration of the specification. It is intended that the specification and examples are considered as exemplary only. Other aspects, features and advantages will be apparent upon an examination of the attached drawings and appended claims. The various embodiments described may be combined or, alternatively, may be applied separately.

**Claims**

1. A pressure indicating valve cap (10) suitable for mounting on a valve stem of a valve of a vehicle tire, the valve cap comprising:

   • a housing assembly (12, 14, 16, 18, 20) bounding a central valve stem receiving space (22) of a substantially cylindrical configuration having a central longitudinal axis (L), the housing assembly including:

     ○ a receiving space inlet opening (24);
     ○ a receiving space end face (26) opposite the inlet opening (24);
     ○ a cylindrical housing wall (28) having internal screw thread that is configured for engaging an external screw thread on the valve stem;
     ○ a valve stem actuator (30) protruding from the receiving space end face (26) into the receiving space (22) and co-axially arranged relative to the central longitudinal axis (L) and configured to keep the valve in an opened condition;

   • a battery receiving space (32) being provided in the housing assembly (12, 14, 16, 18, 20);
   • a printed circuit board (34) being provided in the housing assembly and including:

     ○ a pressure sensor (36);
     ○ a central processing unit (CPU);
     ○ a memory;
     ○ pressure fault signaling means (38);
     wherein the CPU is configured:
     ○ to measure a reference pressure value ($p_{reference}$) when the pressure indicating valve cap (10) is screwed onto the valve stem and to store that reference pressure value ($p_{reference}$) in the memory;
     ○ to repeatedly measure an actual pressure value ($p_{actual}$) and to compare the actual pressure value ($p_{actual}$) with the reference pressure value ($p_{reference}$) and with each comparison establish whether the comparison between the actual pressure value ($p_{actual}$) and the reference pressure value ($p_{reference}$) indicates a pressure value change that is larger than a threshold factor times the reference pressure value ($p_{reference}$) and in the affirmative activate the pressure fault signaling means (38).

2. The pressure indicating valve cap according to claim 1, wherein the threshold factor is in the range of 0,02 to 0,15, that is in the range of 2% to 15%.

3. The pressure indicating valve cap according to claim 2, wherein the threshold factor is 0,10 $\pm$ 0,02, that is 10% $\pm$ 2%.

4. The pressure indicating valve cap according to any one of claims 1-3, wherein the battery receiving space (32) extends circumferentially around the valve stem receiving space (22) and has a donut shape having a central axis that is co-axial with the central axis (L) of the valve stem receiving space (22).

5. The pressure indicating valve cap according to claim 4, including:

   • a battery (40) that has a donut shape that is received in the donut shaped battery receiving space (32).

6. The pressure indicating valve cap according to any one of claims 1-5, wherein the housing assembly includes:

   • a top cover (20) of light transmissive material;
   • the pressure fault signaling means (38) including at least one light emitting diode (LED) that is arranged under the top cover (20) in the housing assembly.

7. The pressure indicating valve cap according to any one of claims 1-6, including:

   • a battery (40) that is arranged in the battery receiving space;
   • battery life signaling means (42);
   the CPU being configured:
   • to repeatedly monitor the remaining capacity of a battery (40); and
   • to activate the battery life signaling means (42) when the remaining capacity is under a battery life threshold value.

8. The pressure indicating valve cap according to the combination of claims 6 and 7, wherein the battery life signaling means (42) include at least one light emitting diode (LED) that is arranged on the printed circuit board (34) under the top cover (20) in the housing assembly, the battery life LED and the pressure fault LED having different colors.

9. The pressure indicating valve cap according to claim 8, wherein the pressure fault LED is red and the battery life LED is yellow.

10. The pressure indicating valve cap according to any one of claims 1-9, including:

    • a temperature sensor;
    the CPU being configured:

    o to measure a reference temperature value ($T_{reference}$) when the pressure indicating valve cap (10) is screwed onto the valve stem and to store that reference temperature value ($T_{reference}$) in the memory;
    ○ to repeatedly measure an actual pressure value ($p_{actual}$) as well as an actual temperature value ($T_{actual}$)
    ○ to repeatedly determine a temperature compensated actual pressure value ($p_{actual}$ compensated) on the basis of the formula:

$$p_{actual\ compensated} = p_{actual} \cdot (T_{reference}/T_{actual});$$

    and
    ○ to compare the temperature compensated actual pressure value ($p_{actual}$ compensated) with the reference pressure value ($p_{reference}$) and with each comparison establish whether the comparison between the temperature compensated actual pressure value ($p_{actual}$ compensated) and the reference pressure value ($p_{reference}$) indicates a pressure value change that is larger than a threshold factor times the reference pressure value ($p_{reference}$) and in the affirmative activate the pressure fault signaling means (38).

11. The pressure indicating valve cap according to any one of claims 1-10, including:

    • a seal (44) arranged against the receiving space end face (26) and configured to form an air tight seal between an end rim of the valve stem and the receiving space end face (26).

12. The pressure indicating valve cap according to any one of claims 1-11, the housing assembly thereof including:

    • an anti-theft jacket (16) having a cylindrical configuration of which a central axis is co-axial with the central axis (L) of the valve stem receiving space (22) and having a height that is substantially equal to the height of the pressure indicating valve cap (10), the anti-theft jacket (16) being freely rotatable around the other parts (12, 14, 18, 20) of the housing assembly;
    • a top cover (20) having notches (46) that are not engageable by hand and may be engaged with a special tool.

13. The pressure indicating valve cap according to any one of claims 1-12, wherein the ratio of the diameter of the valve stem receiving space (22) relative to the external diameter of the valve cap (10) is in the range of 1 : 2,5 to 1 : 3,5, more particularly approximately 1 : 3

14. The pressure indicating valve cap according to any one of claims 1-13, wherein the ratio of the diameter of the valve stem receiving space (22) relative to the total height of the valve cap (10) is in the range of 1 : 1,5 to 1 : 3 more particularly approximately 1 : 2,2.

15. The pressure indicating valve cap according to any one of claims 1-14, including:

    • an electrical contact spring (48) that is arranged to electrically connect a first pole (50) of a battery that is received in the battery receiving space (32) with a electronic circuit of the printed circuit board (34);
    • an electrically conductive housing part (12) of the housing assembly being connected to a second pole (52) of the battery and the electrically conductive housing part (12) being electrically connected to the electronic circuit via mounting screws (54) that mechanically connect the printed circuit board (34) to the electrically conductive housing part (12).

10

20

16

14

Fig. 1

IV

10

20

16

III

46

III

46

Fig.2

IV

Fig. 3

Fig. 4

Fig.5

Fig. 6

Europäisches
Patentamt

European
Patent Office

Office européen
des brevets

## EUROPEAN SEARCH REPORT

Application Number

EP 10 16 1090

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 993 962 B1 (KO YUEH-YING [TW]) 7 February 2006 (2006-02-07) * page 3, line 23 - page 5, line 25; figures 1-7 * | 1 | INV. B60C23/00 |
| A,D | US 2002/059825 A1 (LUNDQVIST TORBJORN BOSON [US] LUNDQVIST TORBJOERN BOSON [US]) 23 May 2002 (2002-05-23) * page 2, paragraph 18 - page 3, paragraph 28; figures 1-5 * | 1 | |
| A | US 2007/193348 A1 (RUTHERFORD ROBERT B [US] ET AL) 23 August 2007 (2007-08-23) * page 3, paragraph 35 - page 8, paragraph 91; figures 1-12 * | 1 | |
| A | US 2007/193349 A1 (PETRUCELLI STEVEN [US]) 23 August 2007 (2007-08-23) * page 3, paragraph 43 - page 11, paragraph 97; figures 1-7,7A,8-15,16A,16B,17,18,19A,19B,20-26 * | 1 | TECHNICAL FIELDS SEARCHED (IPC) |
| A | US 2007/044552 A1 (HUANG TENG-WEN [TW]) 1 March 2007 (2007-03-01) * page 2, paragraph 19 - page 4, paragraph 37; figures 1-6 * | 1 | B60C |

The present search report has been drawn up for all claims

| Place of search | Date of completion of the search | Examiner |
|---|---|---|
| Munich | 30 June 2010 | Lendfers, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 1090

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2010

| Patent document cited in search report | | Publication date | Patent family member(s) | | Publication date |
|---|---|---|---|---|---|
| US 6993962 | B1 | 07-02-2006 | EP | 1700719 A2 | 13-09-2006 |
| US 2002059825 | A1 | 23-05-2002 | AT | 401561 T | 15-08-2008 |
| | | | AU | 1980502 A | 03-06-2002 |
| | | | AU | 2002219805 B2 | 06-10-2005 |
| | | | CA | 2429593 A1 | 30-05-2002 |
| | | | CN | 1505754 A | 16-06-2004 |
| | | | EP | 1344038 A1 | 17-09-2003 |
| | | | ES | 2310568 T3 | 16-01-2009 |
| | | | JP | 2004525016 T | 19-08-2004 |
| | | | MX | PA03004493 A | 15-10-2004 |
| | | | WO | 0242729 A1 | 30-05-2002 |
| | | | US | 2004031316 A1 | 19-02-2004 |
| US 2007193348 | A1 | 23-08-2007 | NONE | | |
| US 2007193349 | A1 | 23-08-2007 | WO | 2007095199 A2 | 23-08-2007 |
| US 2007044552 | A1 | 01-03-2007 | TW | 257903 B | 11-07-2006 |

For more details about this annex : see Official Journal of the European Patent Office, No. 12/82

**EP 2 380 758 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6629454 B